# EUROPÄISCHE PATENTANMELDUNG

(11) **EP 0 905 403 A2**
(43) Veröffentlichungstag der Anmeldung: **31.03.1999**
(21) Anmeldenummer: 98117192.9
(22) Anmeldetag: 10.09.1998
(51) Int. Cl.: F16D 65/24

(54) **Hydraulikzylinder, insbesondere für eine Trommelbremse**

(30) Priorität: 20.09.1997 DE 19741599
(71) Anmelder: ITT MANUFACTURING ENTERPRISES, INC., Wilmington, Delaware 19801 (US)
(72) Erfinder: Beer, Wilhelm, 65428 Rüsselsheim (DE)
(74) Vertreter: Portwich, Peter

(57) **Zusammenfassung**

Bei heute üblichen Hydraulikzylindern, insbesondere Radbremszylindern (1) für Trommelbremsen, wird das Zylindergehäuse (2) in der Regel durch Strangpressen bzw. Gießen hergestellt. Ausgehend von einem solchen Rohteil wird das Zylindergehäuse (2) mittels mechanischer Bearbeitungsschritte in seinen Fertigteilzustand überführt. Zur Vereinfachung der Fertigung und Erhöhung der Flexibilität ist vorgesehen, an Zylindergehäusen (2) unterschiedlichen Typs bzw. unterschiedlicher Abmessungen eine vereinheitlichte Werkstückaufnahme in Gestalt gleicher Spannflächen (8) anzuformen, wodurch verschiedene Zylindergehäuse (2) ohne großen Fertigungsaufwand auf der gleichen mechanischen Bearbeitungsmaschine handhabbar sind.

## Beschreibung

Die Erfindung betrifft einen Hydraulikzylinder, insbesondere Radzylinder für eine Trommelbremse mit einem Zylindergehäuse, das ausgehend von einem Rohteil durch mechanische Bearbeitung in einen Fertigteilzustand überführt wird. Im Zuge dieser mechanischen Bearbeitung des Zylindergehäuses ist es erforderlich, das Zylindergehäuse in einer mechanischen Bearbeitungsmaschine mittels Spannwerkzeugen zu verspannen.

Aus dem Stand der Technik, beispielsweise der DE 42 04 028 A1 oder aber der DE 94 12 216 U1, gehen Ausführungsformen von Radzylindern für Trommelbremsen hervor, bei denen das Zylindergehäuse aus einem Strangpreßprofil bzw. einem gegossenen Rohteil hergestellt wird. Die Zylinderbohrung und die hydraulischen Anschlußbohrungen für den Radzylinder werden anhand von mechanischen Bearbeitungsvorgängen in das Zylindergehäuse-Rohteil eingebracht. Die mechanische, insbesondere spanende Bearbeitung derartiger Radzylindergehäuse erfolgt üblicherweise auf Großserienmaschinen, in denen die einzelnen Werkstücke während der spanenden Bearbeitung eingespannt sind. Speziell bei Herstellung unterschiedlicher Hydraulikzylindertypen bzw. Zylindergehäusen mit unterschiedlichen Abmessungen entstehen unterschiedliche Anforderungen an die Werkstückeinspannung und erfordern damit häufig eine aufwendige Gestaltung der verwendeten Spannwerkzeuge sowie enorme Umrüstzeiten an den spanenden Bearbeitungsmaschinen, insbesondere bei kleineren oder mittleren Stückzahlen. Diese Problemstellung ergibt sich selbstverständlich nicht ausschließlich bei Radbremszylindern, sondern auch beispielsweise bei anderen Hydraulikzylindern, die auf ähnlichem Wege hergestellt werden.

Ausgehend vom aufgeführten Stand der Technik besteht die Aufgabe der Erfindung darin, einen Hydraulikzylinder mit mechanisch zu bearbeitendem Zylindergehäuse anzugeben, bei dem die mechanische Bearbeitung vereinfacht und insbesondere Rüstzeiten reduziert werden.

Gelöst wird die Aufgabe durch die Merkmalskombination des Patentanspruches 1. Danach besitzt der Hydraulikzylinder, insbesondere Radzylinder für eine Trommelbremse, ein Zylindergehäuse, das ausgehend von einem Rohteil durch wenigstens einen Bearbeitungsschritt in einer mechanischen Bearbeitungsmaschine in ein Fertigteil überführt wird. Hierbei weisen Zylindergehäuse unterschiedlichen Typs bzw. unterschiedlicher Abmessungen gleiche, vereinheitlichte Spannflächen auf, die zur Aufnahme des Zylindergehäuses in einer mechanischen Bearbeitungsmaschine dienen. Die verschiedenen Zylindergehäuse erfordern damit nur noch eine einzige Ausführung bzw. Ausrichtung der Spannwerkzeuge an der mechanischen Bearbeitungsmaschine und vermindern damit in erheblichem Maße die Umrüstzeiten bzw. den gesamten Fertigungsaufwand.

Gemäß einer vorteilhaften Ausführung der Erfindung besitzt jedes Zylindergehäuse zumindest drei vereinheitlicht ausgeführte Spannflächen, wobei die Spannflächen am Zylindergehäuse im wesentlichen die Negativkontur eines Spannwerkzeuges der mechanischen Bearbeitungsmaschine besitzen. Damit ist eine sichere und positionsgenaue Aufnahme des einzelnen Zylindergehäuses innerhalb der Bearbeitungsmaschine gewährleistet. Besonders günstig ist die Kontur der Spannflächen derart gestaltet, daß sie eine maßgenaue Positionierung des Zylindergehäuses sowohl in Achsrichtung der Zylinderbohrung wie auch senkrecht dazu erlaubt.

In einer vorteilhaften Weiterbildung sind die Spannflächen an Erhebungen des Zylindergehäuses angeformt. Idealerweise sind dabei die Spannflächen unbearbeitet ausgeführt und werden unmittelbar bei der Herstellung des Zylindergehäuse-Rohteiles vorgesehen. Dies kann auf einfachem Wege während der Herstellung des Zylindergehäuses aus einem Strangpreßprofil geschehen oder aber unmittelbar während des Gießvorganges eines Zylindergehäuses.

Ein Ausführungsbeispiel der Erfindung wird anhand der Zeichnung dargestellt und im folgenden näher erläutert. Darin zeigt:

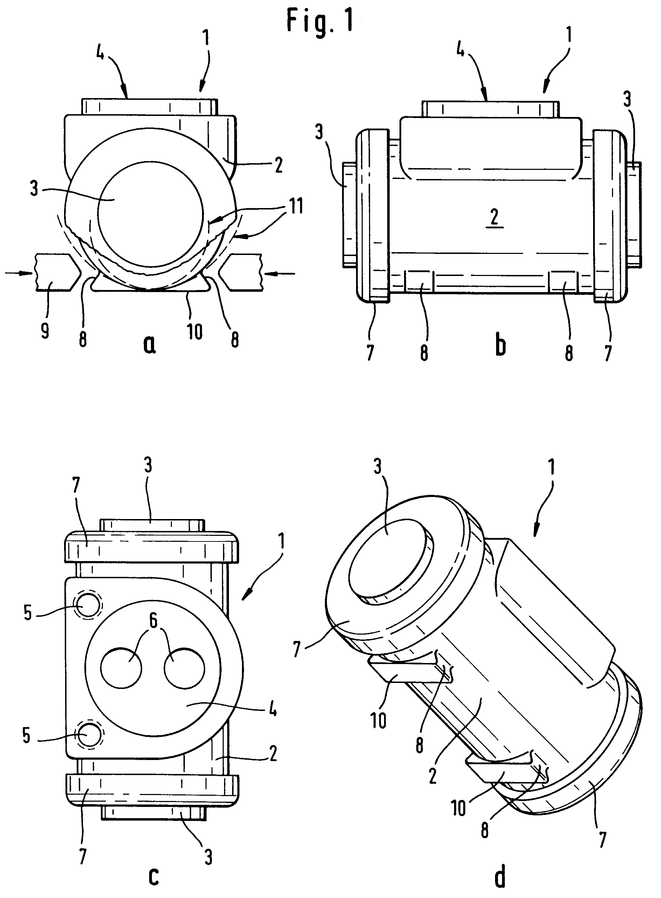

- Fig. 1a - d: vier Ansichten eines Radbremszylinders einer Trommelbremse mit Spannflächen zur Aufnahme mittels Spannwerkzeugen in einer mechanischen Bearbeitungsmaschine.

Als Ausführungsbeispiel eines Hydraulikzylinders ist den Figuren 1a - d ein Radbremszylinder 1 für eine Trommelbremse zu entnehmen. Derartige Radbremszylinder bestehen im wesentlichen aus einem Zylindergehäuse 2, in dessen Innerem innerhalb einer Zylinderbohrung ein bzw. zwei Bremskolben 3 entlang der Längsachse des Zylindergehäuses 2 verschiebbar aufgenommen sind. Das Zylindergehäuse 2 wird im einzelnen üblicherweise mittels einer geeignet gestalteten Anlagenfläche 4 an einer nicht gezeigten Trägerplatte einer Trommelbremse befestigt. Für den in Fig. 1 dargestellten Radbremszylinder 1 wird die Befestigung an der Trägerplatte mittels zweier Gewindebohrungen 5 im Zylindergehäuse 2 und entsprechend gestalteten Befestigungsschrauben realisiert. Darüber hinaus besitzt das Zylindergehäuse 2 an seiner Anlagefläche 4 hydraulische Versorgungsbohrungen 6, über die der innerhalb der Zylinderbohrung sich befindende Druckraum mit hydraulischem Druck beaufschlagbar ist. Hierbei wird der hydraulische Druckraum gegenüber der Umgebung in bekannter Weise mittels zweier Dichtmanschetten 7 abgedichtet, die jeweils am Bremskolben 3 wie auch am Zylindergehäuse 2 befestigt sind.

Bei derartigen Radbremszylindern 1 bzw. ähnlich gestalteten Hydraulikzylindern wird das Zylindergehäuse 2 üblicherweise aus einem Strangpreßprofil gewonnen oder aber es handelt sich um ein gegossenes Zylindergehäuse. Für beide Herstellungsmethoden ergibt sich das Erfordernis, das Zylindergehäuse-Rohteil mittels zumindest eines mechanischen Bearbeitungsschrittes in seinen Fertigteilzustand zu überführen. Durch die mechanische, in der Regel spanende Bearbeitung auf einer geeigneten nicht gezeigten Bearbeitungsmaschine wird vor allem die Zylinderbohrung mit gewünschter Oberflächengüte in das Zylindergehäuse 2 eingebracht. Außerdem werden die Anlagefläche 4, die Gewindebohrungen 5 sowie die hydraulischen Versorgungsbohrungen 6 maßgenau am Zylindergehäuse 2 spanend bearbeitet. Zur Durchführung der spanenden Endbearbeitung ist es notwendig, jedes Zylindergehäuse 2 an geeigneter Stelle an der jeweiligen Serienmaschine für die spanende Bearbeitung zu verspannen. Hierzu sind am Zylindergehäuse 2 eigens angeformte Spannflächen 8 vorgesehen, die zur Aufnahme entsprechend gestalteter Spannwerkzeuge 9 der spanenden Bearbeitungsmaschine dienen. Hierbei sind die Spannflächen 8 an Erhebungen 10 des Zylindergehäuses ausgebildet. Analog zu den in Fig. 1 dargestellten Erhebungen 10 lassen sich die Spannflächen 8 selbstverständlich auch an anderer geeigneter Stelle des Zylindergehäuses 2 anformen. Zur maßgenauen Positionierung und sicheren Halterung des Zylindergehäuses 2 innerhalb der Bearbeitungsmaschine besitzen die Spannflächen 8 idealerweise die Negativkontur der Außenkontur der zugehörigen Spannwerkzeuge 9. Allgemein läßt sich das maßgenaue Positionieren des eingespannten Zylindergehäuses innerhalb der Bearbeitungsmaschine durch Ausbildung von zumindest drei Spannflächen 8 am Zylindergehäuse 2 realisieren. Allerdings ist auch die Anordnung weiterer Spannflächen 8 am Zylindergehäuse 2 möglich. Dabei werden die einzelnen Spannflächen 8 derart gestaltet, daß sie eine eindeutige räumliche Positionierung des Zylindergehäuses 2 an der Bearbeitungsmaschine zulassen. Das Zylindergehäuse wird dadurch sowohl in Achsrichtung der Zylinderbohrung wie auch senkrecht dazu während der mechanischen Bearbeitung innerhalb der Werkstückeinspannung sicher fixiert. Besonders vorteilhaft werden die Spannflächen 8 bzw. Erhebungen 10 unmittelbar bei der Herstellung des Zylindergehäuse-Rohteiles an diesem angeformt. Das heißt, die Erhebungen bzw. Spannflächen 8 werden beim Strangpreßvorgang bzw. Gießen des Zylindergehäuses 2 ausgebildet. Hierdurch entfällt ein zusätzlicher Bearbeitungsschritt für die Umsetzung einer geeigneten Werkstückaufnahme innerhalb der Bearbeitungsmaschine. Aufgrund der Abstimmung der Kontur der Spannfläche 8 auf die Außenkontur des zugehörigen Spannwerkzeuges 9 ist eine mechanische Bearbeitung der Spannflächen 8 nicht notwendig, wodurch diese im Rohteilzustand verbleiben können.

Als besonderer Vorteil der erfindungsgemäß gestalteten Spannflächen 8 ergibt sich die Tatsache, daß derartige Spannflächen für Zylindergehäuse 2 unterschiedlichen Typs bzw. unterschiedlicher Abmessungen vereinheitlicht ausgeführt werden können. Dadurch lassen sich unterschiedliche Zylindergehäuse 2 mit gleicher Gestaltung der jeweiligen Werkstückaufnahme in Form der Spannflächen 8 ohne größere Umrüstzeiten an der gleichen Bearbeitungsmaschine spanend bearbeiten. Insbesondere können Zylindergehäuse 2 mit unterschiedlichem Zylinderdurchmesser 11 mittels eines einzigen Spannwerkzeuges 9 ohne große Umrüstzeiten innerhalb der gleichen Bearbeitungsmaschine gehandhabt werden. Es ergeben sich hieraus erhebliche Vorteile hinsichtlich der Flexibilität des Fertigungsablaufes bei der Herstellung derartiger Radbremszylinder bzw. ähnlich gestalteter Hydraulikzylinder. Durch die Vereinheitlichung der Werkstückaufnahme unterschiedlicher Zylindergehäuse, die durch gleichartige Gestaltung der Spannflächen 8 realisiert wird, ergeben sich also Fertigungsvereinfachungen speziell bei der Umstellung des Fertigungsablaufes von einem ersten Zylindergehäuse auf ein geringfügig anderes Zylindergehäuse.

Wie schon angedeutet, läßt sich die Vereinheitlichung von Spannflächen 8 an unterschiedlich gearteten Zylindergehäusetypen nicht ausschließlich bei Radbremszylindern 1 anwenden, sondern vielmehr auch bei jedem anderen Hydraulikzylinder, der ausgehend von einem Rohteil durch mechanische Bearbeitung in ein Fertigteil überführt werden soll.

## Patentansprüche

1. Hydraulikzylinder, insbesondere Radbremszylinder (1) für eine Trommelbremse, mit einem Zylindergehäuse (2), das ausgehend von einem Rohteil durch wenigstens einen Bearbeitungsschritt in einer mechanischen Bearbeitungsmaschine in ein Fertigteil überführt wird, dadurch **gekennzeichnet**, daß Zylindergehäuse (2) unterschiedlichen Typs bzw. unterschiedlicher Abmessungen gleiche, vereinheitlichte Spannflächen (8) aufweisen, zur Aufnahme des Zylindergehäuses (2) in einer mechanischen Bearbeitungsmaschine.

2. Hydraulikzylinder (1) nach Anspruch 1, dadurch **gekennzeichnet**, daß jedes Zylindergehäuse (2) zumindest drei Spannflächen (8) aufweist.

3. Hydraulikzylinder nach einem der vorhergehenden Ansprüche, dadurch **gekennzeichnet**, daß die Spannfläche (8) am Zylindergehäuse (2) im wesentlichen die Negativkontur der Außenkontur eines Spannwerkzeuges (9) der mechanischen Bearbeitungsmaschine besitzt.

4. Hydraulikzylinder nach einem der vorhergehenden Ansprüche, dadurch **gekennzeichnet**, daß die Spannflächen (8) an Erhebungen (10) des Zylindergehäuses (2) angeformt sind.

5. Hydraulikzylinder nach einem der vorhergehenden Ansprüche, dadurch **gekennzeichnet**, daß das Zylindergehäuse (2) aus einem gegossenen Rohteil gefertigt ist und die Spannflächen unmittelbar beim Gießen des Zylindergehäuse-Rohteiles angeformt sind.

6. Hydraulikzylinder nach einem der Ansprüche 1 bis 4, dadurch **gekennzeichnet**, daß das Zylindergehäuse (2) aus einem Strangpreßprofil gefertigt ist und die Spannflächen (8) während des Strangpreßvorganges am Zylindergehäuse (2) angeformt sind.
